# EUROPEAN PATENT APPLICATION

(11) **EP 1 653 649 A1**
(43) Date of publication of application: **03.05.2006**
(21) Application number: 04105364.6
(22) Date of filing: 28.10.2004
(51) Int. Cl.: H04L 1/24, H04L 1/20, H04L 7/033

(54) **System and method for determining the Bit Error Rate of a digital Signal**

(71) Applicant: Agilent Technologies, Inc., Palo Alto, CA 94306 (US)
(72) Inventor: Lazar, Alexander, 70174, Stuttgart (DE)
(74) Representative: Barth, Daniel Mathias

(57) **Abstract**

The present invention relates to a method and a corresponding system for analyzing a digital signal (V1), in particular a method for determining bit error rates of a digital signal (V1), said method comprising the step of: sampling said digital signal (V1) or sampling a sampled signal (V4) of said digital signal (V1) with a sampling unit (66; 166; 266; 366) at sampling points, wherein said sampling points are subject to a controllable phase shift, said method being characterized by the step of masking said sampling points such that an output (V5) of said sampling unit (66; 166; 266; 366) comprises information on the validity of said digital signal (V1) for the respective phase shift.

## Description

### BACKGROUND OF THE INVENTION

The present invention relates to an improved method for analyzing a digital signal, in particular a method for characterizing a digital signal for determining bit error rates.

The method may be applied as a part of a Bit Error Rate Tester (BERT) system for testing an output signal of an electronic Device Under Test (DUT). A typical BERT is the BERT 86130A BitAnalyzer or the ParBERT 81250 of AGILENT Technologies Inc., Palo Alto, CA 94306, U.S.A.. Such a system allows analyzing a digital signal by varying the sampling points according to a controllable phase shift, said phase shift representing a delay of sampling points, and by varying the threshold value for determining a logical HIGH or a logical LOW for the digital signal. As a result a bit error rate can be determined as a function of the varied values of phase shift and/or threshold. Typical measurements performed by such a system are:
- Bit error rate versus delay of sampling points for measuring the phase margin at a given threshold value;
- Bit error rate versus threshold value for measuring the threshold margin and Q-factor at a given delay of sampling points;
- Bit error rate versus delay of sampling points and threshold value resulting in an eye diagram, said eye diagram comprises contour lines connecting points with equal bit error rate.

For those measurements it is necessary that the data stream representing the digital signal is known, or that the BERT analyzer is able to reproduce the data stream, otherwise no comparison can be made and thus no analysis for the digital signal may be accomplished.

EP 1 385 014 A2 discloses a system having a twofold input structure with a reference channel and a measurement channel, allowing to analyze a data stream without the need of reproducing the expected data stream, thus unknown data streams can be analyzed. This system conducts the input data stream to a measurement channel as well as to a reference channel. The output of the measurement channel and the output of the reference channel are fed to a Bit Error Rate (BER) element. Within the measurement channel a first comparator compares the input data stream with a first variable threshold voltage. The output of the first comparator is input to a first sampling unit wherein the sampling points are subject to a controllable phase shift. Within the reference channel a second comparator compares the input data stream with a second threshold voltage which is adjustable but fixed during an analysis cycle. The output of the second comparator is input to a second sampling unit wherein the sampling points are fixed. The output of the first sampling unit and the output of the second sampling unit are fed to the BER element which compares the two signals and outputs the bit error rate (BER) for the actual variable phase shift and the actual variable threshold.

The known system requires the double data width at the input of the BER element including two demultiplexer devices, two clock paths, and a logic device that has to handle with two clock signals and two n-bit wide data streams, causing significant hardware and software needs in particular with regard to high bit rates.

### SUMMARY OF THE INVENTION

It is an object of the invention to provide an improvement in digital signal analyzing. In a preferred embodiment of the invention the hardware and/or software resources needed for digital signal analyzing are reduced, in particular the number of high speed hardware parts needed and/or the running time of software routines needed to evaluate the output signals of a digital signal analyzer in a BER element. It is a still further object of the invention to present an innovative hardware structure incorporating an inventive sampling technique.

The objects are achieved as defined by the independent claims. Preferred embodiments are defined by the dependent claims.

According to the invention the digital signal itself, or a sampled signal of the digital signal, are sampled at sampling points which are masked in a way such that a comparison of two data channels as known from the prior art is redundant, since the output of said sampling unit already comprises information on the validity of the digital signal. Validity of the digital signal means that the value sampled at the respective actual sampling point is equal to the value sampled at an ideal sampling point. The respective actual sampling point is subject to a controllable phase shift, corresponding to a controllable delay time for the sampling point. The phase shift and thus the delay time can be positive, zero or negative. In case of phase shift and delay time being zero, the actual sampling point represents the ideal sampling point.

In a preferred embodiment a masking control signal is used, the masking control signal is either the digital signal or the complement or inverse of the digital signal. In case the masking control signal is the digital signal the HIGH states of the digital signal can be analysed, i.e. the bit error rate of only the HIGH states can be determined. In case the masking control signal is the inverse of the digital signal the LOW states of the digital signal can be analysed, i.e. the bit error rate of only the LOW states can be determined.

In a preferred embodiment of the invention analysis of the digital signal is further simplified and the BER (bit error rate) is determined by counting events, e.g. bits being HIGH, of two signals being available within the inventive system. This embodiment comprises an adder element, and thus numerics to calculate BERs are limited to dividing the number of said counted events of the first and second signal. In some cases the result from this division has to be subtracted from 1 to derive BER. In an embodiment the sampling unit feeds its output signal into an AND-element. In a first mode, a further input of said AND-element is fed via a second switch by a clock signal of said sampling unit. The output of said AND-element in conjunction with the clock signal allows for a direct calculation of BERs (bit error rates) based on the output signal and on clock signal. In a second mode said second switch may connect said further input of said AND-element to a static "1" and in said second mode output signal of said AND-element equals its input signal.

For inverting the digital signal a Normal/Complement polarity switch is used. The masking control signal is converted in a Return-to-Zero (RZ) format by a RZ formatter using a clock signal derived from a clock recovery unit as an input for the RZ formatter. The bit rate of the clock recovery unit is equal to the maximum bit rate of the digital signal.

The digital signal can be the output signal of a DUT, if only the bit error rate depending on the delay of the sampling points is of interest. If also the bit error rate depending on the signal level for deciding HIGH or LOW state is of interest, the digital signal is the output of a comparator means, comparing an input signal, which may be the output signal of the DUT, with a threshold voltage representing the signal level for deciding HIGH or LOW state. The threshold voltage can be variable. If only the bit error rate depending on the signal level for deciding HIGH or LOW state is of interest, the controllable phase shift can be fixed, e.g. to a value of 0° or 360°.

The present invention also relates to a software program or product for executing the method for analyzing a digital signal when running on a data processing system such as a computer. Preferably, the program or product is stored on a data carrier. Furthermore, the present invention relates to a system for analyzing a digital signal according to the present invention.

### BRIEF DESCRIPTION OF THE DRAWINGS

Other objects and many of the attendant advantages of the present invention will be readily appreciated and become better understood by reference to the following detailed description, taken in conjunction with the accompanied drawings. Features that are substantially or functionally equal or similar will be referred to with the same reference signs.
- Fig. 1: shows a prior art analyzer;
- Fig. 2: shows a first embodiment of the invention;
- Fig. 3: shows a data signal diagram for the first embodiment of the invention in case of characterizing HIGH states;
- Fig.4: shows a data signal diagram with phase shift for the first embodiment of the invention in case of characterizing HIGH states;
- Fig. 5: shows a data signal diagram with polarity switch for the first embodiment of the invention in case of characterizing LOW states;
- Fig. 6: shows data signal diagram with phase shift for the first embodiment of the invention in case of characterizing LOW states;
- Fig. 7: shows a second embodiment of the invention;
- Fig. 8: shows a third embodiment of the invention.

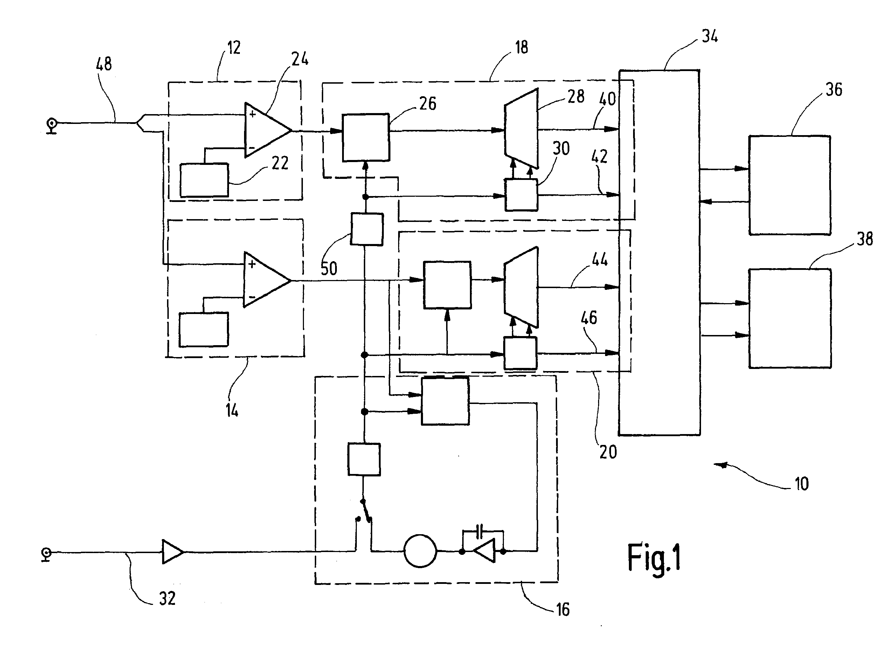

Fig. 1 shows a prior art analyzer 10. The input signal 48 is split into first path 18 and second path 20 connecting the input signal 48 to the Bit Error Rate (BER) element 34. The first path 18 represents the measurement path, whereas second path 20 represents the reference path. The outputs of the first path 18, namely a first data stream 40 and a first clock 42, are fed to BER element 34. Similar, the outputs of the second path 20, namely a second data stream 44 and a second clock 46, are fed to BER element 34. Thus two n-bit wide data streams 40, 44 and two clock signals 42, 46 are fed into the BER element 34 where a comparison of both data streams 42, 46 takes place. The comparison taking place in the BER element 34 provides information about the validity of the first data stream 40, and thus allows calculation of the bit error rate.

A first comparator block 12 is interconnected between the input signal 48 and the first path 18. The first comparator block 12 comprises a first comparator 24 and a first threshold voltage unit 22 providing a first variable threshold voltage. The input signal 48 is fed to one input of the first comparator 24, while the threshold voltage is fed to the other input of the first comparator 24. The output of the comparator 24 is fed to the first path 18. The first path 18 comprises a first sampling unit 26, a first demultiplexer 28 and a first divider 30. At the output of the first path 18 the first data stream 40 and the first clock 42 are fed to BER element 34.

The output of a second comparator block 14 comprising similar elements as said first comparator block 12 is fed into the second path 20, comprising similar elements as said first path 18. At the output of the second path 20 the second data stream 44 and the second clock 46 are fed to BER element 34.

A first RAM (random access memory) 36, a second RAM 38, clock recovery unit 16, sampling clock input 32 and a phase shift 50 complete the prior art analyzer 10.

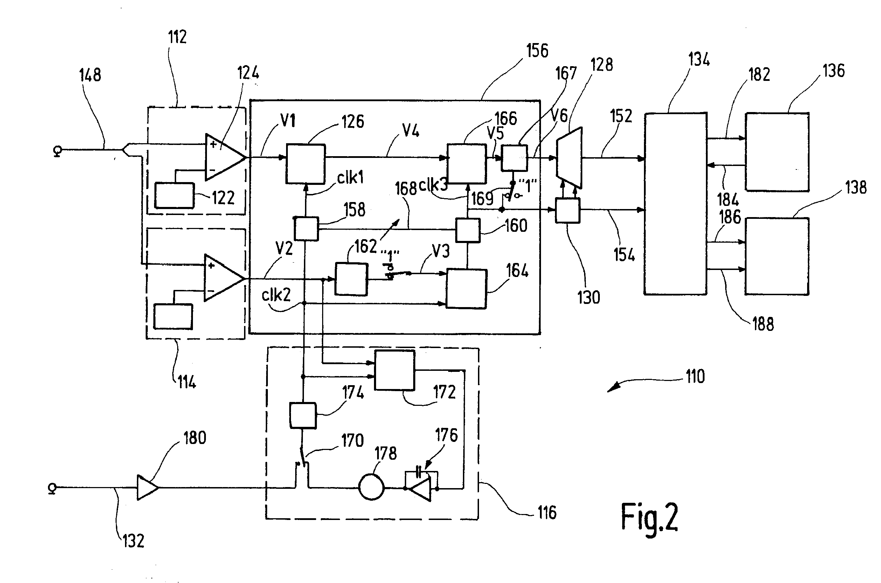

Fig. 2 shows a first embodiment of an analyzer 110 according to the invention. The input signal 148 is fed to a first comparator block 112 with a first threshold voltage unit 122. Output signal V1 of said first comparator block 112 is fed into a first sampling unit 126 of a first analyzer structure 156. The input signal 148 is fed to a second comparator block 114 comprising a second threshold voltage unit. Output signal V2 of said second comparator block 114 is fed into a polarity switch 162 and into a clock phase detector 172.

The output signal V4 of first sampling unit 126 is fed into a second sampling unit 166. A clock signal clk2 is fed to a first phase shifter 158 and output clk1 of said first phase shifter 158 is fed to said first sampling unit 126, wherein clk1 represents sampling points controlling said first sampling unit 126. Phase shift of a second phase shifter 160 is coupled to phase shift of said first phase shifter 158 as indicated by the dotted line 168. A Normal/Complement polarity switch 162 receives the second digital signal V2. Output V3 of the polarity switch 162 represents a masking control signal for masking the sampling points of a second sampling unit 166. Output V3 of the polarity switch 162 is fed to a Return-to-Zero (RZ) formatter 164, said RZ-formatter 164 also receives said clock signal clk2. The output signal of said RZ-formatter 164 is fed to said second phase shifter 160. Output signal clk3 of said second phase shifter 160 controls said second sampling unit 166. Output signal V5 of said second sampling unit 166 is fed to an AND-element 167 and output signal V6 of said AND-element 167 is fed to a first 1:n demultiplexer 128. The second input of said AND-element 167 is fed by signal clk3 if second switch 169 is in the position shown in fig. 2. If said second switch 169 is in its alternate position, said second input of AND-element 167 is fed by a logical "1", and thus output signal V6 equals input signal V5 of said AND-element 167. A first divider 130 is driven by output signal clk3 of said second phase shifter 160 and divider 130 controls said first demultiplexer 128. A further output of said divider 130 provides BER element clock 154 to the BER element 134. The output of demultiplexer 128 is fed to BER element 34 as a single n-bit wide data stream 152.

A first output 182 of the BER element 134 is connected to a first Random Access Memory (RAM) 136 and BER element 134 may also get data by line 184 from said first RAM 136. A second RAM 138 exchanges data with BER element 134 via line 186 and line 188. The RAM s 136, 138 store data being in relation to said input signal 148 and/or data protocols.

The clock recovery unit 116 comprises a Voltage-Controlled-Oscillator VCO 178, a first switch 170, a third phase shifter 174, and a clock phase detector 172 as well as a filter element 176. Assuming first switch 170 is in the position as shown in fig. 2, the output of VCO 178 is fed to the third phase shifter 174, which outputs clock signal clk2 internally to clock phase detector 172 and externally to said first analyzer structure 156. The output signal V2 of second comparator block 114 is input to clock phase detector 172. The output of clock phase detector 172 is fed to filter element 176. The output signal of filter element 176 controls the VCO 178. Thus clock signal clk2 is phase-locked to the output signal V2, which has a fixed phase difference, ideally being zero, to said input signal 148 and to said output signal V1 of the first comparator block 112.

Assuming first switch 170 is in its alternate position other than shown in fig. 2, a clock input 132 is fed to an amplifier element 180. The output of the amplifier element 180 is fed to first switch 170. Output of first switch 170 is fed to third phase shifter 174. The other parts of clock recovery unit 116 are not in use in this case.

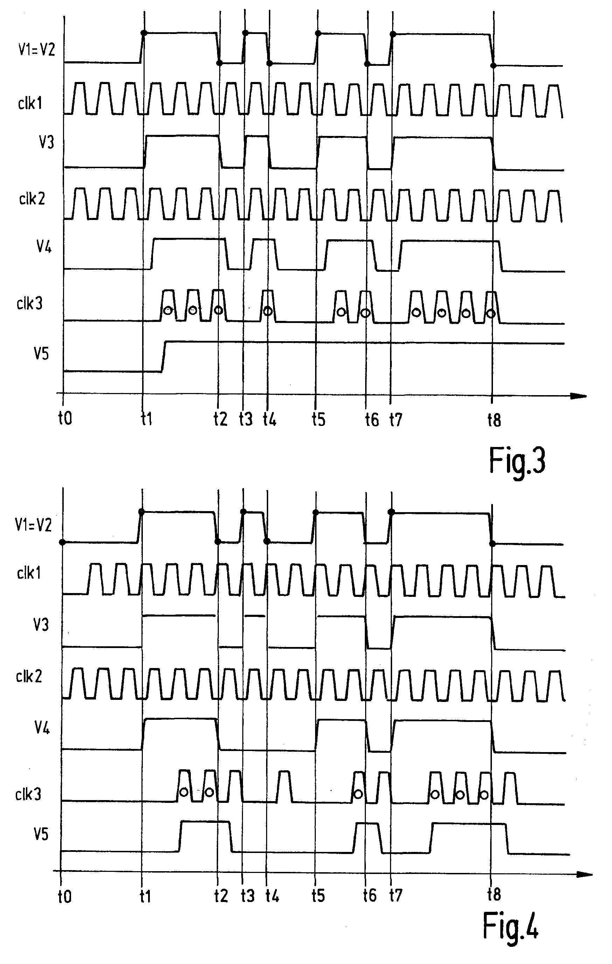

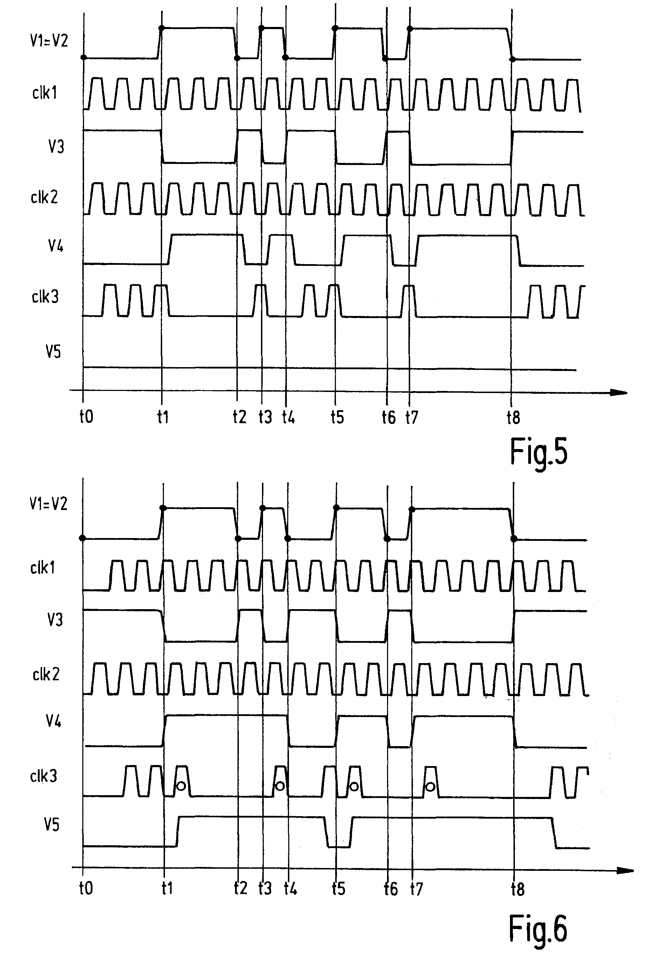

Fig. 3 to fig. 6 show signal diagrams of the first embodiment of the invention shown in fig. 2 for the case of digital signal V1 equals digital signal V2. Points in time t1, t2, t3,... to t8 in fig. 3 to fig. 6 mark the beginning of states of the digital signal V1 which equals digital signal V2. For the cases shown in fig. 3 to fig. 6. marks t1, t3, t5 and t7 mark the beginning of a HIGH state of signal V1 and of signal V2. Marks t2, t4, t6 and t8 mark the beginning of a LOW state of signal V1 and of signal V2. Mark t0 marks the beginning of the time scale as used in fig. 3, wherein all signals shown in fig. 3 and fig. 4 show a LOW state at to.

The LOW and HIGH states and transitions of the following signals are shown in fig. 3 to fig. 6 from top to bottom of the diagram:
- V1 = V2: digital signal V1 at the output of first comparator block 112; digital signal V2 at the output of the second comparator block 114.
- clk1: clock signal controlling the sampling points of the first sampling unit 126
- V3: input signal to the RZ-Formatter 164 provided by polarity switch 162
- clk2: clock signal controlling the sampling points of the second sampling unit 166
- V4: output signal of the first sampling unit 126 provided as input to the second sampling unit 166
- clk3: clock signal controlling the sampling points of the second sampling unit 166
- V5: output signal of the second sampling unit 166

Circles within individual HIGH states of clk3 in figs. 3 to 4 mark bits which will be recognized to be valid. Circles within individual HIGH states of clk3 in figs. 5 to 6 mark bits which will be recognized to be invalid. These marked bits are available as the output signal V6 of AND-element 167 if said second switch 169 is in the position shown in fig. 2 and allow for a simple and direct calculation of the BER (bit error rate).

Fig. 3 and fig. 4 show cases for analyzing the HIGH states of said input signal 148, whereas fig. 5 and fig. 6 show cases for analyzing the LOW states of said input signal 148. The digital signal V1 shown is just an example and any other possible binary signal can be analyzed by the embodiment of fig. 2.

For the case shown in fig. 3 there is no phase shift introduced by phase shifter 158 and thus there is no phase difference or delay between clock signals clk2 and clk1. For the case shown in fig. 3 phase shifter 160 does not introduce any phase shift, thus clock signal clk3 being in phase with the output signal of the RZ-Formatter 164.

Input signal V1 to the first sampling unit 126 is changing from LOW to HIGH at t1. The first sampling unit 126 samples, controlled by clock signal clk1, the input signal V1. The output signal V4 of first sampling unit 126 changes from LOW to HIGH with the first leading edge of clk1 after t1. The second sampling unit 166, controlled by clk3, samples output signal V4. With the first leading edge of clk3 after t1 the output V5 of the second sampling unit 166 changes from a LOW state to a HIGH state. For the error-free case shown in fig. 3, output V5 will remain HIGH because at each time the clock signal clk3 initiates a sampling with second sampling unit 166 the input signal V4 to second sampling unit 166 is HIGH.

For the case shown in Fig. 3 the BER may be calculated by BER = 1 - (number of bits countable in V6 / number of bits countable in clk3) = 1 - 10 / 10 = 0.

For the case shown in fig. 4 there is a phase shift introduced by phase shifter 158 as can be seen by the delay of clk1 compared to clk2. By the phase shift coupling 168 a corresponding phase shift is introduced by second phase shifter 160 between the output signal of the RZ-formatter 164 and clk3. In this case the output voltage V5 of the second sampling unit 166 shows several transitions, instead of having a first transition from LOW to HIGH and remaining HIGH thereafter as in fig. 3. Those transitions indicate bit errors due to the introduced phase shift.

By varying the phase shift of clk1 of the first sampling unit 126, and thereby also varying the coupled phase shift or delay of clk3 controlling the second sampling unit 166, and varying the threshold at the first comparator block 112, the output signal V5 can be used to measure the analog performance of the data transitions and of the HIGH bit periods of the input signal 148.

By use of the Normal/Complement polarity switch 162 in front of the RZ-formatter 164, analyzing of the LOW bit periods of the input signal 148 is possible and is described below in conjunction with fig. 5 and fig. 6.

For the case shown in Fig. 4 the BER may be calculated by BER = 1 - (number of bits countable in V6 / number of bits countable in clk3) =1-6/10=4/10. The bits countable in V6 are marked by circles within the curve of clock signal clk3.

Fig. 5 shows an example for a digital signal diagram, now for the case that polarity switch 162 is set for characterizing the LOW states of digital signal V1, wherein digital signal V1 is based upon input signal 148. In this case V5 remains in the LOW state as long as no errors are detected. By comparing fig. 5 with fig. 3 it is evident that in fig. 5 the output signal V3 of polarity switch 162 is inverted and clk3 controlling the second sampling unit 166 comprises leading edges where in fig. 3 no leading edges were present. Clock signal clk3 in fig. 5 remains LOW at times when there have been transitions in fig. 3. Thus, now the LOW states of input signal 148 can be analyzed.

For the case shown in fig. 5 there is no phase shift introduced by phase shifter 158 and thus there is no phase difference or delay between clock signals clk2 and clk1. For the case shown in fig. 5 phase shifter 160 does not introduce any phase shift, thus clock signal clk3 being in phase with the output signal of the RZ-Formatter 164.

Input signal V1 to the first sampling unit 126 is changing from LOW to HIGH at t1. The first sampling unit 126 samples, controlled by clock signal clk1, the input signal V1. The output signal V4 of first sampling unit 126 changes from LOW to HIGH with the first leading edge of clk1 after t1. The second sampling unit 166, controlled by clk3, samples output signal V4. With the first leading edge of clk3 after t0 the output V5 of the second sampling unit 166 remains in a LOW state. For the error-free case shown in fig. 5 the output V5 will remain LOW because at each time clk3 initiates a sampling with second sampling unit 166, the input signal V4 to second sampling unit 166 is LOW.

For the case shown in Fig. 5 the BER may be calculated by BER = (number of bits countable in V6) / (number of bits countable in clk3) = 0 / 10 = 0.

In fig. 6 there is a phase shift introduced by phase shifter 158 as can be seen by the delay of clk1 versus clk2. By the phase shift coupling 168 a corresponding phase shift is introduced by second phase shifter 160 between the output signal of the RZ-formatter 164 and clk3. In this case the output voltage V5 of the second sampling unit 166 shows several transitions, instead of remaining LOW as in fig. 5. Those transitions indicate bit errors due to the introduced phase shift.

By varying the phase shift of clk1 of the first sampling unit 126, and thereby also varying the coupled phase shift or delay of clk3 controlling the second sampling unit 166, and varying the threshold at the first comparator block 112, the output signal V5 can be used to measure the analog performance of the data transitions and of the LOW bit periods of the input signal 148.

Combining the results of the detected HIGH periods of the data stream and of the detected LOW periods, all the measurements of state of the art bit error rate testing can be performed with the random or unexpected data stream. For example the bit error rate of the HIGH bits can be determined by dividing the counted errors of signal V5 by the counted RZ-Pulses. This operation has to be implemented in the BER element 134 comprising protocol, receive and BER logic.

For the case shown in Fig. 6 the BER may be calculated by BER = (number of bits countable in V6) / (number of bits countable in clk3) = 4/9. The bits in V6 are marked by circles within the curve of clock signal clk3.

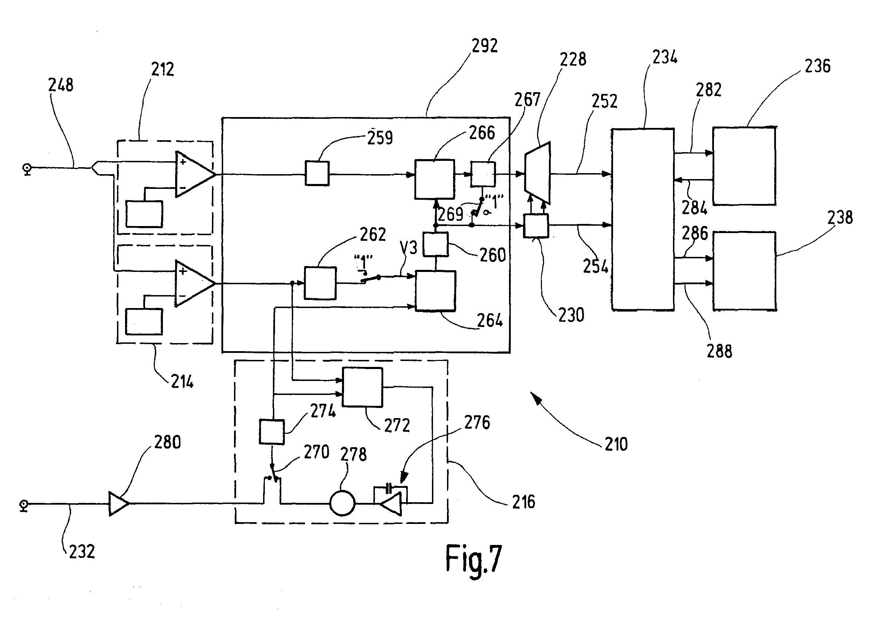

Fig. 7 shows a second embodiment of an analyzer 210 according to the invention. Comparing fig. 7 to fig. 2 shows that in fig. 7 said second sampling unit 266 is now preceded by a phase shifter 259 coupling the output of said first comparator block 212 to said second sampling unit 266. The first sampling unit 126 of the first embodiment shown in fig. 2 is absent. Instead, the second sampling unit 266, which can be realized as a flip-flop, also implements the function of the first sampling unit. Second phase shifter 260 still receives its input signal in the same manner as in the first embodiment shown in fig. 2 but there is no more coupling of the phase shift of said second phase shifter 260 to an other phase shifter. In this second embodiment either the phase shifter 259 or the second phase shifter 260 is variable and the other one is fixed and serves as a delay allowing the RZ-formatter 264 to settle. The remaining elements of the circuit are the same as within the first embodiment of fig. 2 and needs no further description. It is an advantage of this second embodiment that the circuit of the analyzer 210 is further simplified.

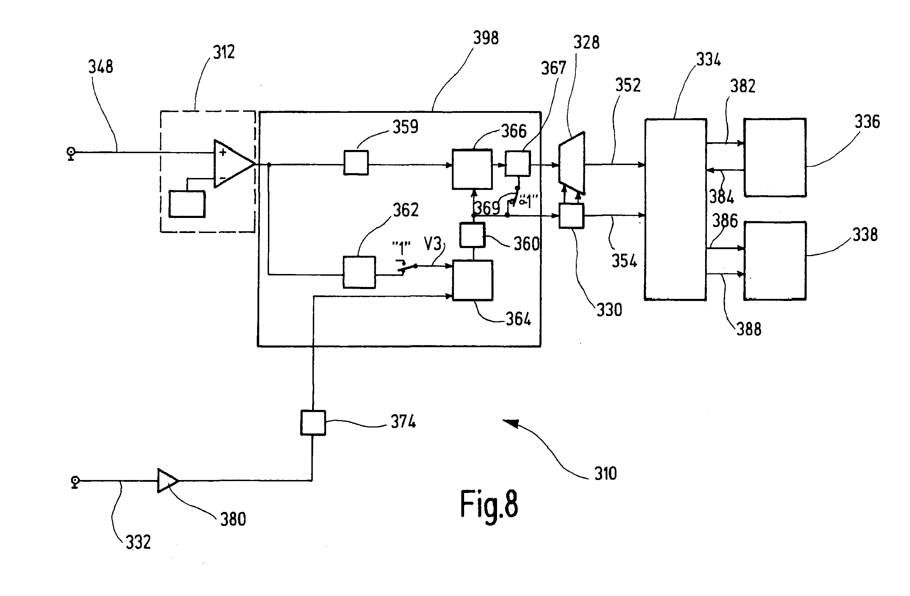

Fig. 8 shows a third embodiment of an analyzer 310 according to the invention, being further simplified by having only one comparator block 312 and accordingly only one digital signal now being provided to phase shifter 359 and polarity switch 362. Additionally the RZ-formatter 364 receives its clock signal from a sampling clock input 332 via amplifier element 380 and third phase shifter 374. It is an advantage of this third embodiment 100 that it may be used as part of an known single input BERT analyzer structure having only one digital input signal.

According to the present invention, an output of said AND-element 167; 267; 367 comprises information on the validity of said digital signal V1 for the respective phase shift and for the respective threshold.

Level-shifting of the input signal can take place in front of said comparator in case of a differential input signal.

## Claims

1. A method for analyzing a digital signal (V1), in particular a method for determining bit error rates of a digital signal (V1), said method comprising the step of:
• sampling said digital signal (V1) or sampling a sampled signal (V4) of said digital signal (V1) with a sampling unit (166; 266; 366) at sampling points, wherein said sampling points are subject to a controllable phase shift,
said method being **characterized by** the step of:
• masking said sampling points such that an output (V5) of said sampling unit (166; 266; 366) comprises information on the validity of said digital signal (V1) for the respective phase shift.

2. The method of claim 1, **characterized in that** said masking of said sampling points is controlled by a masking control signal (V3), said masking control signal (V3) being derived from said digital signal (V1).

3. The method of claim 2 or any of the claims above, **characterized in that** said masking control signal (V3) being said digital signal (V1) or being the complement of said digital signal (V1).

4. The method of claim 2 or 3, **characterized in that** said masking of said sampling points is based upon converting said masking control signal (V3) to a Return-to-Zero data stream by an Return-to-Zero(RZ)-formatter (164; 264; 364).

5. The method of claim 1 or any of the claims above, **characterized in that** said masking of said sampling points is based upon HIGH and/or LOW states of said digital signal (V1).

6. The method of claim 1 or any of the claims above, **characterized in that** said sampling points are based upon a clock signal (clk2) , wherein said clock signal (clk2) is phase-locked, preceding to said controllable phase shift, to said digital signal (V1) by a clock recovery unit (116; 216).

7. The method of claim 1 or any of the claims above, **characterized in that** said sampling unit (166; 266; 366) is a bistable trigger circuit, in particular a Flip-Flop, and that switching between a LOW state validity evaluation and a HIGH state validity evaluation is based upon routing said digital signal (V1) via a Normal/Complement polarity switch (162; 262; 362) to a Return-to-Zero formatter (164; 264; 364).

8. The method of claim 1 or any of the claims above, **characterized in that** said sampling unit (166; 266; 366) feeds its output signal (V5) into an AND-element (167; 267; 367), and **in that** a further input of said AND-element (167; 267; 367) is switchable to a clock signal (clk3) for said sampling unit (166; 266; 366).

9. The method of claim 8, **characterized in that** in a first mode said further input of said AND-element (167; 267; 367) is fed via a second switch (169; 269; 369) by clock signal (clk3), and **in that** an output signal (V6) of said AND-element (167; 267; 367) in conjunction with said clock signal (clk3) allows for a direct calculation of bit error rates, whereby in a second mode said second switch (169; 269; 369) connects said further input of said AND-element (167; 267; 367) to a static "1", and in said second mode output signal (V6) of said AND-element (167; 267; 367) equals its input signal (V5).

10. The method of claim 1 or any of the claims above, **characterized in that** said method further comprises the step of:
• providing an input signal (48; 148; 248; 348) to a first input of at least one comparator (24; 124), wherein a second input of said comparator (24; 124) is set to a first threshold voltage, wherein said comparator (24; 124) outputs a first comparison signal being said digital signal (V1).

11. A software program or product, preferably stored on a data carrier, for executing the method of claim 1 or any of the above claims when running on a data processing system such as a computer.

12. A system for analyzing a digital signal (V1 ), in particular a method for determining bit error rates of a digital signal (V1), said system comprising:
• a sampling unit (66; 166; 266; 366) for sampling said digital signal (V1), or for sampling a sampled signal (V4) of said digital signal (V1), at sampling points, wherein said sampling points are subject to a controllable phase shift,
said system being **characterized by** the step of:
• masking circuit for masking said sampling points such that an output (V5) of said sampling unit (66; 166; 266; 366) comprises information on the validity of said digital signal (V1) for the respective phase shift.
